# EUROPEAN PATENT SPECIFICATION

(11) **EP 3 406 041 B1**
(45) Date of publication and mention of the grant of the patent: **21.07.2021**
(21) Application number: 16871795.7
(22) Date of filing: 13.12.2016
(51) Int. Cl.: H04L 5/00, H04L 27/00, H04W 16/14

(54) **DISCOVERY REFERENCE SIGNAL TRANSMISSION WINDOW AND POSITION IDENTIFICATION**
ENTDECKUNGSREFERENZSIGNALÜBERTRAGUNGSFENSTER UND POSITIONSIDENTIFIKATION
FENÊTRE DE TRANSMISSION DE SIGNAL DE RÉFÉRENCE DE DÉCOUVERTE, ET IDENTIFICATION DE POSITION

(30) Priority: 20.01.2016 US 201662281035 P
(43) Date of publication of application: 28.11.2018
(73) Proprietor: Apple Inc., Cupertino, CA 95014 (US)
(72) Inventor: JEON, Jeongho, San Jose, California 95120 (US); KWON, Hwan-Joon, Santa Clara, California 95054 (US); YE, Qiaoyang, Fremont, California 94538 (US); BHORKAR, Abhijeet, Fremont, California 94555 (US)
(74) Representative: Barnfather, Karl Jon
(86) International application number: PCT/US2016/066337
(87) International publication number: WO 2017/127181

(56) References cited:
- EP-A1- 3 369 193
- WO-A1-2015/167232
- WO-A1-2015/178660
- ZTE: "Details of DRS design for LAA", 3GPP DRAFT; R1-155533 DETAILS OF DRS DESIGN FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmo, Sweden; 20151005 - 20151009 4 October 2015 (2015-10-04), XP051002414, Retrieved from the Internet: URL:http://www.3gpp.org/ftp/Meetings_3GPP_ SYNC/RAN1/Docs/ [retrieved on 2015-10-04]
- Alcatel-Lucent ET AL: "LTE-U Forum: LTE-U Forum LTE-U CSAT Procedure TS V1.0 (2015-10)", , 31 October 2015 (2015-10-31), XP055336095, Retrieved from the Internet: URL:http://www.lteuforum.org/uploads/3/5/6 /8/3568127/lte-u_forum_lte-u_sdl_csat_proc edure_ts_v1.0.pdf [retrieved on 2017-01-17]
- Qualcomm: "Introducing MulteFire: LTE-like performance with Wi-Fi-like simplicity | Qualcomm", , 11 June 2015 (2015-06-11), XP055378290, Retrieved from the Internet: URL:https://www.qualcomm.com/news/onq/2015 /06/11/introducing-multefire-lte-performan ce-wi-fi-simplicity [retrieved on 2017-06-02]
- LG ELECTRONICS: "DRS design in LAA", 3GPP DRAFT; R1-155387 DRS DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051002294, Retrieved from the Internet: URL:http://www.3gpp.org/ftp/Meetings_3GPP_ SYNC/RAN1/Docs/ [retrieved on 2015-10-04]

## Description

### FIELD

The present disclosure relates to wireless communications, and more specifically, to communication of a discovery reference signal (DRS), including the DRS transmission window and position identification.

### BACKGROUND

Wireless mobile communication technology uses various standards and protocols to transmit data between a node (e.g., a transmission station) and a wireless device (e.g., a mobile device), or a user equipment (UE). Some wireless devices communicate using orthogonal frequency-division multiple access (OFDMA) in a downlink (DL) transmission and single carrier frequency division multiple access (SC-FDMA) in an uplink (UL) transmission, for example. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the node can be an Evolved Universal Terrestrial Radio Access Network (E-UTRAN) Node B (also commonly denoted as evolved Node Bs, enhanced Node Bs, eNodeBs, or eNBs) as well as one or more Radio Network Controllers (RNCs), which communicate with the UE. The DL transmission can be a communication from the node (e.g., eNB) to the UE, and the UL transmission can be a communication from the wireless device to the node. In LTE, data can be transmitted from the eNodeB to the UE via a physical downlink shared channel (PDSCH). A physical UL control channel (PUCCH) can be used to acknowledge that data was received, among other transmissions.

The explosive wireless traffic (data flow) growth across various network cells leads to an urgent need of rate improvement. With mature physical layer techniques, further improvement in the spectral efficiency will likely be marginal. On the other hand, the scarcity of licensed spectrum in low frequency band continues to result in a deficit in the data rate boost. Thus, interests are emerging in the operation of LTE systems in unlicensed spectrum. As a result, one major enhancement for LTE in 3GPP Release 13 has been to enable operation in the unlicensed spectrum via Licensed-Assisted Access (LAA), which expands the system bandwidth by utilizing the flexible carrier aggregation (CA) framework introduced by the LTE-Advanced system. Enhanced operation of LTE systems in unlicensed spectrum is expected in future releases and 5G systems. Potential LTE operation in unlicensed spectrum includes, but is not limited to the LTE operation in the unlicensed spectrum via dual connectivity (DC) (referred to as DC based LAA) and the standalone LTE system in the unlicensed spectrum, in which LTE-based technology operates in unlicensed spectrum without utilizing an "anchor" in licensed spectrum. This combines the performance benefits of LTE technology with the simplicity of Wi-Fi-like deployments.

The unlicensed frequency band of interest in 3GPP can be the 5 GHz band, which has wide spectrum with global common availability. The 5 GHz band in the US is governed by Unlicensed National Information Infrastructure (U-NII) rules by the Federal Communications Commission (FCC). The main incumbent system in the 5 GHz band is the Wireless Local Area Networks (WLAN), especially those based on the IEEE 802.11 a/n/ac technologies, for example. Because WLAN systems are widely deployed for carrier-grade access service and data offloading, sufficient care should be taken before the deployment, and why Listen-Before-Talk (LBT) is considered as a useful feature of Rel-13 LAA system for fair coexistence with the incumbent WLAN system. LBT is a procedure whereby radio transmitters first sense the communication medium and transmit only if the medium is sensed to be idle. Further, LBT is an important feature for co-existence in the unlicensed band, wherein a transmitter listens to detect potential interference on the channel, only transmitting in the absence of interfering signals above a given threshold. Furthermore, different regions such as Europe have regulations concerning LBT for operation in unlicensed bands. WiFi devices use carrier sense multiple access with collision avoidance (CSMA/CA) as an LBT scheme, for example.

WO 2015/167232 A1 discloses a method and an apparatus for performing cell on/off operation in a wireless convocation system. This document provides a method and an apparatus for transmitting a periodic reference signal in the wireless communication system. An evolved NodeB (eNB) configures a periodic reference signal, and transmits the periodic reference signal in a specific duration. The periodic reference signal may be a discovery reference signal (DRS) or a channel state information reference signal (CSI RS). The periodic reference signal may be transmitted flexibly or transmitted by performing listen-before-talk (LBT) with reservation of transmission of the periodic reference signal.

WO 2015/178660 A1 discloses a method and a device for interference detection on an unlicensed band. An LTE-U device works in an unlicensed-band cell, and the LTE-U device detects an interference signal of the unlicensed-band cell and processes data transmission. By adopting the method of the present invention, the LTE-U device works in the unlicensed band and may measure the interference signal from other wireless system, so as to avoid mutual interference between LTE-U and the other wireless communication system.

3GPP Tdoc. R1-155533, "details of DRS design for LAA", 3GPP TSG RAN WG1 Meeting #82bis, October 2015 discloses the views on LAA DRS design and have the following proposals: the different time positions within the DMTC can be distributed within a time window whose length equals to maximum DRS occasion duration (5ms) in Rel-12; the LAA DRS transmission in the burst without PDSCH can use LBT Cat 2 with the enhancement that has randomly-selected delay offset for each CC; the portion of Rel-12 DRS with continuous symbols is contained inside LAA DRS; the further LAA DRS design includes the frequency domain extension from the legacy PSS/SSS; and PDSCH rate-matching with respect to DRS is performed only in the specific DRS occasion candidate(s), wherein the specific candidate(s) can be the first DRS occasion candidate in DL TX burst, or subframe 0/5 if subframe 0/5 is DRS occasion candidates.

3GPP Tdoc. R1-155387, "DRS design in LAA", 3GPP TSG RAN WG1 meeting #82bis, October 2015 discusses details of DRS design, wherein, among other things, the following two suggestions are provided by this contribution: According to one suggestion, SSS sequence for DRS follows SSS sequence for subframe#0 in Rel-12 when it is transmitted in subframe#0∼4 and SSS sequence for subframe#5 in Rel-12 when it is transmitted in subframe#5∼9, wherein CRS sequence follows subframe number where it is transmitted. According to another suggestion, if DRS consists of legacy PSS/SSS/CRS only, UE assumes that the DRS is transmitted in every subframe#0/5, and otherwise, UE assumes that the DRS is not transmitted outside the DMTC.

EP 3369193 A1, which is prior art following Article 54(3) EPC, relates to discovery reference signaling for dynamically-timed transmissions. A base station for secondary-cell (S-cell) operation in an unlicensed band is subject to listen-before-talk (LBT) rules. The apparatus generates S-cell discovery reference signal (DRS) that includes a primary synchronization signal (PSS) based on a cell ID associated with the base station, a secondary synchronization signal (SSS), a cell-specific reference signal (CRS), and optionally CSI-RS. Solutions are described for generating portions of the DRS to accommodate the placement of the DRS in arbitrary subframes.

### SUMMARY

The object of the present application is solved by the independent claims. Advantageous embodiments are described by the dependent claims.

### BRIEF DESCRIPTION OF THE DRAWINGS

FIG. 1 illustrates a block diagram illustrating an example wireless communications network environment for a UE or eNB according to various aspects or embodiments.
FIG. 2 illustrates example system or device for signaling DTxW and location / position information according to various aspects or embodiments.
FIG. 3 illustrates an example network device for signaling DTxW and location / position information according to various aspects or embodiments.
FIG. 4 illustrates an example DL transmission configuration(s) according to various aspects or embodiments.
FIG. 5 illustrates another example DL transmission configuration(s) according to various aspects or embodiments.
FIG. 6 illustrates an example process flow for signaling DTxW and location / position information according to various aspects or embodiments.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor, a process running on a processor, a controller, a circuit, circuitry or a circuit element, an object, an executable, a program, a storage device, a computer, a tablet PC and/or a mobile phone with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components or elements without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising".

### OVERVIEW

In consideration of the above described deficiencies, various components and techniques are disclosed that enable networks devices (e.g., eNBs) to generate and signal a discovery reference signal (DRS) transmission window (DTxW) based on predetermined criteria (e.g., a DRS offset, a DRS periodicity, a DTxW length, or other related parameters disclosed herein). In particular, the DTxW can be similar to the DRS measurement timing configuration (DMTC) in legacy LTE systems, but also differ in some aspects, such as being cell-specific over being UE-specific in certain embodiments. In standalone LTE systems operating in the unlicensed band, transmission of the master information block (MIB) (e.g., via a physical broadcast channel (PBCH)), as well as the system information blocks (SIBs), cannot necessarily be assumed to be transmitted over a licensed carrier, as it has for LAA systems. Thus, a reliable transmission of the MIB and SIBs can be important to prevent excessive initial access delay.

The DTxW can include the MIB and an evolved system information block (eSIB) that comprises a combination of SIB 1 and SIB 2 among SIBS of a DL transmission and potentially additional other information, which can serve to facilitate the initial random access by UEs to a network. Various configuration or operations can be utilized in order to communicate or signal the DTxW within or along a DL transmission from an eNB to a UE. The DL transmission, for example, can be via the PBCH on an unlicensed carrier without the use of an "anchor" in licensed spectrum. The DL transmission can provide the DTxW with a DRS as well as additional data providing for a location or position of the DTxW or other predetermined criteria by which the DRS or DTxW can be based on for configuration.

In an aspect, a basestation or an eNB can generate a DTxW based on a set of predetermined criteria. The set (one or more) of predetermined criteria can include, for example, a DTxW periodicity, DTxW duration / length, an indication of whether the MIB is within the DTxW or not, or other parameters / predetermined criteria related to initiating a connection to a network on an unlicensed band. The eNB can further communicate the DL transmission comprising the DTxW over a PBCH on an unlicensed carrier, and a UE can receive the DL transmission (e.g., by a communication component) over a network. This network by which the UE is communicatively coupled to the eNB can be a MuLTEfire network, which utilized an unlicensed band such as by a MuLTEfire protocol (e.g., as originating by MuLTEfire alliance, or solely operating in an unlicensed band) that does not require an LAA anchor or a network that operates completely in an unlicensed band, for example. The DL transmission can comprise the DRS in a DTxW that enable subsequent access after being processed to an unlicensed stations or network device (e.g., an eNB, WiFi station, router, or the like) without a licensed assisted access operation. The DRS can be efficiently generated / processed at a scheduling component based on the DTxW and associated parameters or predetermined criteria. As such, signaling operations, techniques, methods and associated components for DTxW can resolve access in a reliable manner (without failures or a high transmission / connection success) and effectively (without delay, or reducing initial access delay). Additional aspects and details of the disclosure are further described below with reference to figures.

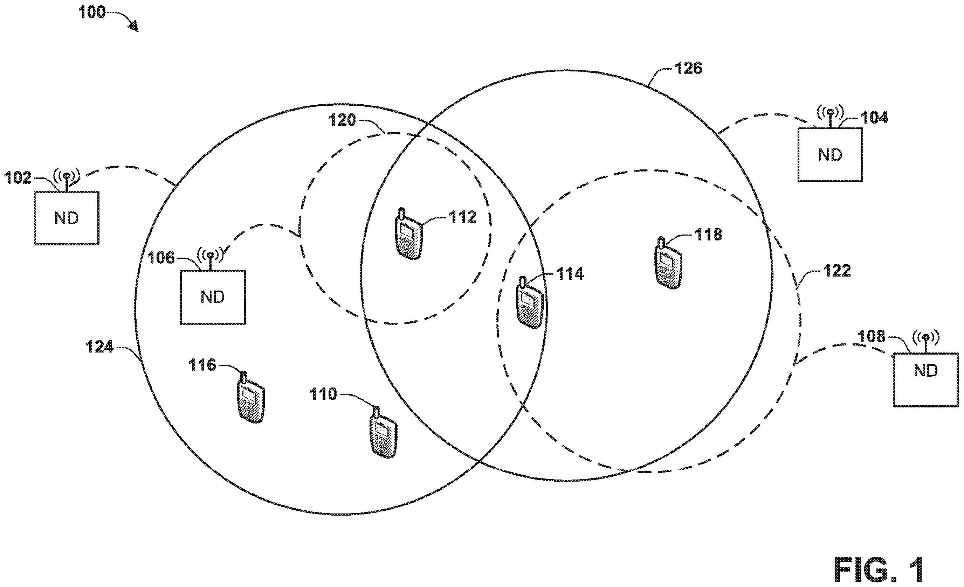

**FIG. 1** illustrates an example non-limiting wireless communications environment 100 that can enable signaling of a DTxW configuration in a DL transmission. Information within the DL transmission can further enable one or more UEs to process the DRS within the DTxW based on various predetermined criteria, and then further generate transmissions based on the DRS. The DRS is introduced in LTE to facilitate or enable the fast transition of small cells (e.g., access point node, eNB, base station) from an OFF state to an ON state by transmitting low duty cycle signals for radio resource management (RRM) measurement during OFF state. During the OFF period, for example, DRS, consisting of synchronization signals (e.g., primary synchronization signals, secondary synchronization signals, or the like) and reference signals, is transmitted to allow UEs to discover and measure the cell or node, which could be dormant or in an OFF state. Here, DRS can be transmitted within a periodically occurring time window (e.g., a DTxW), and similar to the DRS measurement timing configuration (DMTC) occasion, have a duration of 6 ms and a configurable period of 40 / 80 / 160 ms.

In addition, the DTxW can also have a fixed or configurable period based on the predetermined criteria and processes at the eNB, for example. The transmission of DRS can also be subject to listen before talk (LBT) operations. A DL transmission burst containing DRS without PDSCH, for example, can follow a single idle observation interval (e.g., about 25 µs). Due to LBT, the DRS may not be transmitted as frequent as scheduled. To increase the DRS transmission opportunity so as to improve the performance of functionalities (e.g., synchronization, RRM measurement) relying on DRS, and resolve such issues, the DRS can be transmitted by the network once in any subframe within the DTxW window of the DL transmission based on the decisions of the eNB.

Wireless communications environment 100 can include one or more cellular broadcast servers or macro cell network devices 102, 104 (e.g., base stations, eNBs, access points (APs), WiFi stations / devices / routers, or the like) as well as one or more other network devices such as small cell network devices or APs (e.g., small eNBs, micro-eNBs, pico-eNBs, femto-eNBs, home eNBs (HeNBs), or Wi-Fi nodes) 106, 108 deployed within the wireless communications environment 100 and servicing one or more UE devices 110, 112, 114, 116, 118 for wireless communications. Each wireless communications network (e.g., cellular broadcast servers 102, 104 and small cell network devices 106, 108) can comprise one or more network devices (e.g., a set of network devices (NDs)) that operate in conjunction in order to process network traffic for the one or more wireless / mobile devices or UE devices 110, 112, 114, 116, or 118. For example, macro cell NDs 102, 104 can comprise a set of network devices that are cellular enabled network devices. In another example, the small cell network devices 106, 108 can include a set of network devices that operate with a smaller coverage zone than the macro cell network devices 102 and 102, for example, or control similar coverage zones as the macro cell devices. As one of ordinary skill in the art can appreciate, this disclosure is not limited to any one network environment architecture / deployment.

Although NDs 106 and 108 are described as small cell network devices, they can also be Wi-Fi enabled devices or wireless local area network (WLAN) devices, as well as macro cell network devices, small cell network devices, or some other type of ND operable as a base station, eNB, or secondary cell network device for example. Alternatively one or more of the macro cell NDs 102 and 104 could be small cell network devices or other NDs of a different radio access technology (RAT) that operate with different frequency carriers, for example.

As illustrated, each of the one or more Wi-Fi access points 106, 108, for example, can have a corresponding service area 120, 122. Additionally, each of the one or more cellular broadcast servers or macro cell NDs 102, 104 can have a corresponding service area 124, 126. However, it should be understood that the wireless communications environment 100 is not limited to this implementation. For example, any number of APs or NDs with respective service areas can be deployed within the wireless communications environment 100. Further, any number of cellular broadcast servers and respective service areas can be deployed within the wireless communications environment 100 as well.

Although only five UE devices 110, 112, 114, 116, 118 are illustrated, any number of UE devices can be deployed within the wireless communications environment 100. A UE device can contain some or all of the functionality of a system, subscriber unit, subscriber station, mobile station, mobile, wireless terminal, network device, mobile device, remote station, remote terminal, access terminal, user terminal, terminal, wireless communication device, wireless communication apparatus, user agent, user device, or other ND, for example.

In an aspect, cellular broadcast servers or macro cell NDs 102, 104 and small cell NDs 106, 108 can monitor their surrounding radio conditions (e.g., by employing respective measurement components). For example, each of the macro cell NDs 102, 104 and small cell NDs 106, 108 can determine network traffic load on its respective network by performing a network diagnostic process. As an example, during a network listen procedure, such as a listen before talk (LBT) protocol / procedure macro cell NDs 102, 104, small cell NDs 106, 108 or UE devices 110, 112, 114, 116, 118 can scan their radio environment to determine network performance statistics or network parameters (e.g., frequency, SNR, signal quality, QoS, QoE, load, congestion, signal rate, etc.). Various parameters associated with macro cell NDs 102, 104, small cell NDs 106, 108, or UE devices 110, 112, 114, 116, 118 can be detected during the network diagnostic or LBT procedure or measurements, such as, but not limited to, frequency bands, scrambling codes, common channel pilot power, bandwidth across respective networks, universal mobile telecommunications system terrestrial radio access receive signal strength indicator, as well as frequency carrier priorities for particular cell groups (e.g., a normal group or a reduced group) and so on.

In an example scenario, UE devices 110, 112, 114, 116, 118 can be serviced by networks through one of the macro cell NDs 102, 104, or small cell NDs 106, 108. As a UE device moves within the wireless communications environment 100, the respective user equipment device could move in and out of the coverage area of the associated serving network. For example, as a user is sending / receiving communications through their respective UE device, the user might be walking, riding in a car, riding on a train, moving around a densely populated urban area (e.g., a large city), wherein the movement could cause the mobile device to be moved between various wireless communication networks. In such cases, it can be beneficial for the UE to route the network traffic (e.g., handoff) from a serving ND to a target ND in order to continue the communication (e.g., avoid dropped calls) or facilitate offloading for load distribution or other efficiency purposes, such as via unlicensed bands without utilizing LAA on licensed bands for signaling in a timely and reliable manner.

In one example, the DTxW can be signaled with DRS on a DL transmission that is generated by the eNB 102 to a UE 116 on an unlicensed band / carrier on a PBCH. In stand-alone LTE systems operating in the unlicensed band (e.g., MuLTEfire), for example, the transmission of MIB (PBCH) and SIBs cannot necessarily be assumed to be transmitted over a licensed carrier as it has been for an LAA system. Therefore, a reliable transmission of MIB and SIBs is important to prevent excessive initial access delay.

In one embodiment, the DTxW period can be fixed or configurable among one of a group of periods, which can include 40 ms, 80 ms, 120 ms, 160 ms or the like, as selected for implementation by the eNB 102. In addition, a duration or length of the DTxW can be fixed or configurable up to about 10 ms or less (e.g., such as at about 6 ms). Aside from just DTxW periodicity or length, other predetermined criteria / parameters (e.g., a location or an offset of the DRS or of the DTxW within the DL transmission) related to the generation / identification of the DTxW and DRS of a DL transmission can also be further communicated by the eNB 102 or the UE 110. These predetermined criteria / parameters can be communicated from the eNB 102 and received by the UE 110, 116 explicitly with additional bits (e.g., about 8 to 10 bits) or implicitly by a pre-configuration / predetermined operation, in which the UE 110, 116 can determine such relevant criteria without an explicit indication. Instead, the UE 110, 116 could determine such criteria / parameters from an analysis of the DL transmission or an analysis of other related parameters. Further, the UE could determine or gain knowledge of the such criteria by a predetermined configuration of a standard specification or a stored memory, for example.

One or more DTxWs of a DL transmission can include a subframe (e.g., subframe#0 or other subframe index) that can be indexed or identified from among various subframes within a frame. The DL transmission / burst can comprise multiple frames, in which each frame can have multiple subframes that can be indexed sequentially within each frame, for example. The subframes can be part of or provide a location identification with a starting and end point within the DL transmission. The DL transmission can have multiple subframes indexed or numbered between zero and eight, or some other range, for example, in which another frame begins and the indexed subframes cycle therein or re-cycle in sequence. The predetermined criteria can further include an offset with a reference to a subframe index for enabling a determination of the location of the DTxW within the DL transmission or a frame of the DL transmission.

In another embodiment, each DTxW of a DL transmission can comprise the subframe zero (subframe #0) and can start / initiate from a frame boundary. The UE 116 can identify the location of DTxW via an explicit indication in the MIB of a processed DL transmission. For example, additional or new information bits can be introduced to indicate whether the MIB is transmitted in DRS within DTxW. Some of the unused expressions of the already defined information bits in MIB can be also used for this purpose or generated according to the eNB 102, for example. The additional bits can be a part of the predetermined criteria signaled as a part of the DL transmission or inferred implicitly by the UE 116. An explicit indication can also be generated / signaled by one or more bits as to whether the MIB is transmitted outside of the DTxW or within.

In another embodiment, the UE 116 can identify the location of DTxW implicitly such as by a function or operation. For example, a frame / subframe can be analysed by a modulo (mod) of a system frame number (SFN), such as by mod(SFN, 4) = n, where n is 0,1,2, or 3, can be implicitly assumed among the eNB 102 and a UE 110, 116. The DTxW can then be known to stars from the starting boundary of the frame based on a given n in order to determine an offset of the DTxW within each frame or DL transmission.

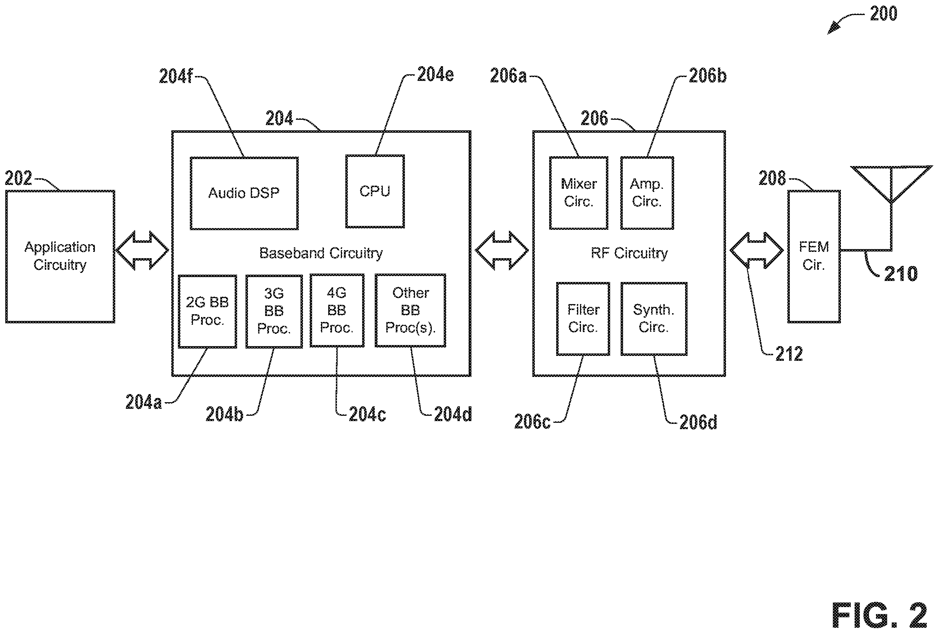

Embodiments described herein and further detailed in this disclosure can be implemented into an example system using any suitably configured hardware / software. **FIG. 2** illustrates, for one or more embodiments, example components of a cell network device 200, such as a base station, a macro cell network device, a secondary cell network device, a small cell network device, an evolved/enhanced NodeB (eNB), or any other network device (e.g. a user equipment, pico cell, Femto cell or the like) that can be used on a wireless network to generate or process signaling for scheduling transmissions. In some embodiments, the cell network device 200 can include application circuitry 202, baseband circuitry 204, Radio Frequency (RF) circuitry 206, front-end module (FEM) circuitry 208 and one or more antennas 210, coupled together at least as shown.

The application circuitry 202 can include one or more application processors. For example, the application circuitry 202 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory / storage and can be configured to execute instructions stored in the memory/storage to enable various applications and/or operating systems to run on the system.

The baseband circuitry 204 can include circuitry such as, but not limited to, one or more single-core or multi-core processors. The baseband circuitry 204 can include one or more baseband processors and/or control logic to process baseband signals received from a receive signal path of the RF circuitry 206 and to generate baseband signals for a transmit signal path of the RF circuitry 206. Baseband processing circuity 204 can interface with the application circuitry 202 for generation and processing of the baseband signals and for controlling operations of the RF circuitry 206. For example, in some embodiments, the baseband circuitry 204 can include a second generation (2G) baseband processor 204a, third generation (3G) baseband processor 204b, fourth generation (4G) baseband processor 204c, and/or other baseband processor(s) 204d for other existing generations, generations in development or to be developed in the future (e.g., fifth generation (5G), 6G, etc.). The baseband circuitry 204 (e.g., one or more of baseband processors 204a-d) can handle various radio control functions that enable communication with one or more radio networks via the RF circuitry 206. The radio control functions can include, but are not limited to, signal modulation/demodulation, encoding/decoding, radio frequency shifting, etc. In some embodiments, modulation/demodulation circuitry of the baseband circuitry 204 can include Fast-Fourier Transform (FFT), precoding, and/or constellation mapping / demapping functionality. In some embodiments, encoding/decoding circuitry of the baseband circuitry 204 can include convolution, tail-biting convolution, turbo, Viterbi, and/or Low Density Parity Check (LDPC) encoder/decoder functionality. Embodiments of modulation/demodulation and encoder/decoder functionality are not limited to these examples and can include other suitable functionality in other embodiments.

In some embodiments, the baseband circuitry 204 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204e of the baseband circuitry 204 can be configured to run elements of the protocol stack for signaling of the PHY, MAC, RLC, PDCP and/or RRC layers of an Open Systems Interconnection (OSI) model. One or more components herein, for example, can also be included or a part of baseband circuitry 204 or other circuitry to operate in conjunction with a RF circuitry 206 or a communication interface / platform for wireless communication herein as part of or by a PHY layer, for example, or other OSI layer (e.g., MAC layer), which can also be enabled by an RF interface (e.g., 212) that can interface communication signals with the RF circuitry 206 and other components as well as any external component or device.

In some embodiments, the baseband circuitry can include one or more audio digital signal processor(s) (DSP) 204f. The audio DSP(s) 204f can be include elements for compression/decompression and echo / signal cancellation and can include other suitable processing elements in other embodiments or operate one or more various embodiments or aspects described herein within any one or more of the various protocol layers. Components of the baseband circuitry can be suitably combined in a single chip, a single chipset, or disposed on a same circuit board in some embodiments. In some embodiments, some or all of the constituent components of the baseband circuitry 204 and the application circuitry 202 can be implemented together such as, for example, on a system on a chip (SOC).

In some embodiments, the baseband circuitry 204 can provide for communication compatible with one or more radio technologies. For example, in some embodiments, the baseband circuitry 204 can support communication with a EUTRAN and/or other wireless metropolitan area networks (WMAN), a wireless local area network (WLAN), a wireless personal area network (WPAN). Embodiments in which the baseband circuitry 204 is configured to support radio communications of more than one wireless protocol can be referred to as multi-mode baseband circuitry.

RF circuitry 206 can enable communication with wireless networks using modulated electromagnetic radiation through a non-solid medium. In various embodiments, the RF circuitry 206 can include switches, filters, amplifiers, etc. to facilitate the communication with the wireless network. RF circuitry 206 can include a receive signal path which can include circuitry to down-convert RF signals received from the FEM circuitry 208 and provide baseband signals to the baseband circuitry 204. RF circuitry 206 can also include a transmit signal path which can include circuitry to up-convert baseband signals provided by the baseband circuitry 204 and provide RF output signals to the FEM circuitry 208 for transmission.

In some embodiments, the RF circuitry 206 can include a receive signal path and a transmit signal path. The receive signal path of the RF circuitry 206 can include mixer circuitry 206a, amplifier circuitry 206b and filter circuitry 206c. The transmit signal path of the RF circuitry 206 can include filter circuitry 206c and mixer circuitry 206a. RF circuitry 206 can also include synthesizer circuitry 206d for synthesizing a frequency for use by the mixer circuitry 206a of the receive signal path and the transmit signal path. In some embodiments, the mixer circuitry 206a of the receive signal path can be configured to down-convert RF signals received from the FEM circuitry 208 based on the synthesized frequency provided by synthesizer circuitry 206d. The amplifier circuitry 206b can be configured to amplify the down-converted signals and the filter circuitry 206c can be a low-pass filter (LPF) or band-pass filter (BPF) configured to remove unwanted signals from the down-converted signals to generate output baseband signals. Output baseband signals can be provided to the baseband circuitry 204 for further processing. In some embodiments, the output baseband signals can be zero-frequency baseband signals, although this is not a requirement. In some embodiments, mixer circuitry 206a of the receive signal path can comprise passive mixers, although the scope of the embodiments is not limited in this respect.

In some embodiments, the mixer circuitry 206a of the transmit signal path can be configured to up-convert input baseband signals based on the synthesized frequency provided by the synthesizer circuitry 206d to generate RF output signals for the FEM circuitry 208. The baseband signals can be provided by the baseband circuitry 204 and can be filtered by filter circuitry 206c. The filter circuitry 206c can include a low-pass filter (LPF), although the scope of the embodiments is not limited in this respect.

In some embodiments, the mixer circuitry 206a of the receive signal path and the mixer circuitry 206a of the transmit signal path can include two or more mixers and can be arranged for quadrature down-conversion or up-conversion respectively. In some embodiments, the mixer circuitry 206a of the receive signal path and the mixer circuitry 206a of the transmit signal path can include two or more mixers and can be arranged for image rejection (e.g., Hartley image rejection). In some embodiments, the mixer circuitry 206a of the receive signal path and the mixer circuitry 206a can be arranged for direct down-conversion or direct up-conversion, respectively. In some embodiments, the mixer circuitry 206a of the receive signal path and the mixer circuitry 206a of the transmit signal path can be configured for super-heterodyne operation.

In some embodiments, the output baseband signals and the input baseband signals can be analog baseband signals, although the scope of the embodiments is not limited in this respect. In some alternate embodiments, the output baseband signals and the input baseband signals can be digital baseband signals. In these alternate embodiments, the RF circuitry 206 can include analog-to-digital converter (ADC) and digital-to-analog converter (DAC) circuitry and the baseband circuitry 204 can include a digital baseband interface to communicate with the RF circuitry 206.

In some dual-mode embodiments, a separate radio IC circuitry can be provided for processing signals for each spectrum, although the scope of the embodiments is not limited in this respect.

In some embodiments, the synthesizer circuitry 206d can be a fractional-N synthesizer or a fractional N/N+2 synthesizer, although the scope of the embodiments is not limited in this respect as other types of frequency synthesizers can be suitable. For example, synthesizer circuitry 206d can be a delta-sigma synthesizer, a frequency multiplier, or a synthesizer comprising a phase-locked loop with a frequency divider.

The synthesizer circuitry 206d can be configured to synthesize an output frequency for use by the mixer circuitry 206a of the RF circuitry 206 based on a frequency input and a divider control input. In some embodiments, the synthesizer circuitry 206d can be a fractional N/N+2 synthesizer.

In some embodiments, frequency input can be provided by a voltage controlled oscillator (VCO), although that is not a requirement. Divider control input can be provided by either the baseband circuitry 204 or the applications processor 202 depending on the desired output frequency. In some embodiments, a divider control input (e.g., N) can be determined from a look-up table based on a channel indicated by the applications processor 202.

Synthesizer circuitry 206d of the RF circuitry 206 can include a divider, a delay-locked loop (DLL), a multiplexer and a phase accumulator. In some embodiments, the divider can be a dual modulus divider (DMD) and the phase accumulator can be a digital phase accumulator (DPA). In some embodiments, the DMD can be configured to divide the input signal by either N or N+2 (e.g., based on a carry out) to provide a fractional division ratio. In some example embodiments, the DLL can include a set of cascaded, tunable, delay elements, a phase detector, a charge pump and a D-type flip-flop. In these embodiments, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d can be configured to generate a carrier frequency as the output frequency, while in other embodiments, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency can be a LO frequency (fLO). In some embodiments, the RF circuitry 206 can include an IQ/polar converter.

FEM circuitry 208 can include a receive signal path which can include circuitry configured to operate on RF signals received from one or more antennas 210, amplify the received signals and provide the amplified versions of the received signals to the RF circuitry 206 for further processing. FEM circuitry 208 can also include a transmit signal path which can include circuitry configured to amplify signals for transmission provided by the RF circuitry 206 for transmission by one or more of the one or more antennas 210.

In some embodiments, the FEM circuitry 208 can include a TX/RX switch to switch between transmit mode and receive mode operation. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry 206). The transmit signal path of the FEM circuitry 208 can include a power amplifier (PA) to amplify input RF signals (e.g., provided by RF circuitry 206), and one or more filters to generate RF signals for subsequent transmission (e.g., by one or more of the one or more antennas 210.

In some embodiments, the cell network device 200 can include additional elements such as, for example, memory/storage, display, camera, sensor, and/or input/output (I/O) interface. In some embodiments, the electronic device of Figure 2 may be configured to perform one or more processes, techniques, and/or methods as described herein, or portions thereof.

In some embodiments, the network device 200 can operate to generate / process DL transmissions with DTxWs, as well as an indication of the position / location of a DTxW within a DL transmission, as well as a DRS subframe within the DTxWs. The DTxW can be cell-specific rather than UE specific, and thus, the DTxW can be utilized according to the cell network, for example, by which the UE (e.g., as the network device 200) connects with instead of utilizing a particular UE identification (UE ID). The DL transmission processed by a UE or generated by an eNB as the network device 200 can include the DTxW with the DRS/MIB/eSIB transmission via a PBCH over an unlicensed carrier for MuLTEfire. The MIB and eSIB (a combination of systems information blocks, e.g., SIB # 0 and SIB #1, or the like) can be included in DRS within the DTxW, for example, and can float within the DTxW or be pushed back based on the LBT operations or clear channel assessment (CCA) operations so that for each group of DL data frames or DL transmission the DTxW window could have the DRS subframe of one of the frames of the DL transmission at different positions in time.

Alternatively or additionally, the MIB, eSIB or both can also be transmitted outside DTxW. In one example, every subframe #0 can include an MIB within a DTxW of the DL transmission burst. Therefore, from a UE perspective, the identification of DTxW location can be desired to ensure efficient access or reliable transmission without a large delay. This identification of the DTxW location within the frames can thus serve as a reference point for initial access to the unlicensed channel or band.

In one example, the identification of the location of a DTxW can be done either explicitly or implicitly by the UE (e.g., UE 116 of FIG. 1). When performed explicitly, for example, one or more additional information bits can be introduced to indicate whether the MIB is transmitted in DRS within the DTxW or outside of the DTxW. On the other hand, in the network (e.g., a MuLTEfire network) not utilizing LAA or a licensed band, it is likely that the MIB can also indicate a subframe index because the DRS can be floating within any frame or subframe of the DTxW, or not in a same location from among frames or among DL transmission, for example. The MIB, for example, can therefore provide indication of an offset with reference to either a subframe #0 if the DRS subframe is locates in a first subframe range of subframe indices 0 to 4, or a second subframe range of subframe indices 5 to 9, for example, among a frame of a DL transmission, which can include multiple frames (e.g., about four) before recycling in index number to another DL transmission or data burst. Each subframe, for example, can be about 1 milliseconds (ms), while each DTxW, for example, can be up to10 ms or less, and each frame about 10 ms comprising about ten subframes.

In another aspect, one or more UEs 116 can process / receive an offset of the DRS position within the DL transmission or DTxW of the DL transmission from an eNB 102. This offset can be expressed as a function such as a function with a modulo operation, or an explicit indication with a fixed offset. For example, an indication can be communicated explicitly with one or more additional bits with the DL transmission in the DTxW or in the DRS within the DTxW to indicate / identify the offset to a UE 200 (e.g., UE 110 or 116). In particular, the one or more UEs 116, for example, can thus be configured to identify whether the DRS is transmitted either in a first subframe range such as subframe #0 to #4, or in a second subframe range such as subframe #5 to #9 based on the SSS sequence.

In one example, potentially three bits can be introduced for UEs to identify the subframe index with DRS (DRS subframe) from among different possibilities (e.g., about five possibilities) for a location because the DRS subframe can be floating within the DTxW depending on when the LBT is successful or not, and the DTxW duration / length (e.g., about 6 ms, or up to 10 ms). Because three bits can express either expressions or pieces of information (e.g., predetermined criteria / one or more parameters), there can be three remaining expressions. Accordingly, in another embodiment, the system or network device 200, for example, can utilize one of the unused expressions of the bits indicating a subframe index to indicate whether the DRS is transmitted within the DTxW. This explicit indication does not preclude the exploitation of any unused expressions in any information bits within MIB, from which these three bits, for example, can be a part of or signaled within.

In other embodiments, the UE can also identify the location of the DTxW within or among DL transmissions implicitly. For example, a frame can have a mod(SFN, 4) = n, where n is 0, 1, 2, or 3, and the DTxW position / location can be implicitly assumed by UEs such that the DTxW starts from the starting boundary (n) of a frame as a reference, where a DL transmission can comprise multiple frames of fixed or configurable (variable) duration based on decision processes by the eNB 102, for example. Additionally, the SFN with the DTxW can be directly indicated by expanding the SFN information bits in MIB from 8 bits to 10 bits as being discussed in MuLTEfire protocols. The SFN can also be inferred by the UE 110, for example, from the scrambling sequence matching operations as similar in LTE systems.

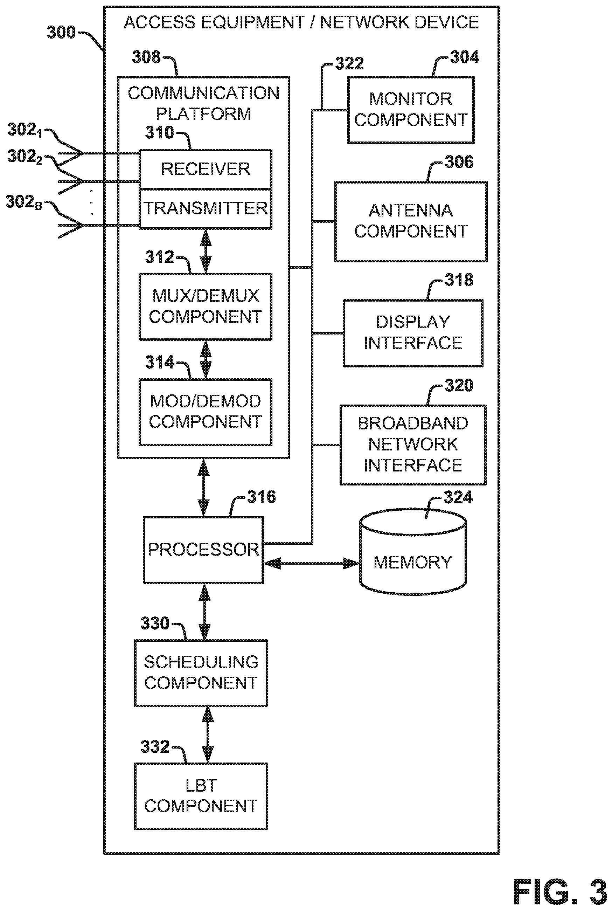

**FIG. 3** further illustrates an embodiment of a network device or system 300 to be employed in an eNB, a UE or other network device that facilitates or enables signaling mechanisms to process or provide signaling of the configuration of the DTxW window and position identification for rapid access to an unlicensed network or band through solely unlicensed channels / carriers. System or device 300 can include the baseband circuitry component 204, the radio frequency (RF) circuitry component 206, or a front end module circuitry component 308 of **FIG. 2****,** as well as communication component or platform 308 with transmitter circuitry component(s) / receiver circuitry component 310 (e.g., a communication component), a processor 316, memory 324, a scheduling component 330 and an LBT component 332.

In various aspects, device 300 can be included within an Evolved Universal Terrestrial Radio Access Network (E-UTRAN) Node B (Evolved Node B, eNodeB, or eNB 102), other base station, network access point, a secondary cell network device (e.g., a small cell, or WiFi network device) or other cell network component/device (e.g., UE 116 and 110) in a wireless communications network (e.g., network 124). Memory 324 also can include instructions that can be implemented by processor 316, transmitter circuitry 310, or receiver circuitry 310 to implement various aspects or embodiments described herein.

Memory 324 can comprise one or more machine-readable medium / media including instructions that, when performed by a machine or component herein cause the machine to perform acts of the method or of an apparatus or system for concurrent communication using multiple communication technologies according to embodiments and examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Access equipment (e.g., eNB, network entity, or the like), UE or software related to access of the network device 300 can receive and transmit signal(s) from and to wireless devices, wireless ports, wireless routers, etc. through segments 302₁-302_{B} (B is a positive integer). Segments 302₁-302_{B} can be internal and/or external to access equipment and/or software related to access of a network, and can be controlled by a monitor component 304 and an antenna component 306. Monitor component 304 and antenna component 306 can couple to communication component 308, which can include electronic components and associated circuitry that provide for processing and manipulation of received signal(s) and other signal(s) to be transmitted.

In an aspect, communication component 308 includes the receiver/transmitter 310 that can convert analog signals to digital signals upon reception of the analog signals, and can convert digital signals to analog signals upon transmission. In addition, receiver / transmitter 310 can divide a single data stream into multiple, parallel data streams, or perform the reciprocal operation. Coupled to receiver/transmitter 310 can be a multiplexer / demultiplexer 312 that can facilitate manipulation of signals in time and frequency space. Multiplexer / demultiplexer 312 can multiplex information (data/traffic and control/signaling) according to various multiplexing schemes such as time division multiplexing, frequency division multiplexing, orthogonal frequency division multiplexing, code division multiplexing, space division multiplexing. In addition, multiplexer / demultiplexer component 312 can scramble and spread information (e.g., codes, according to substantially any code known in the art, such as Hadamard-Walsh codes, Baker codes, Kasami codes, polyphase codes, and so forth).

A modulator / demodulator 314 can also be a part of communication component / platform 308, and can modulate information according to multiple modulation techniques, such as frequency modulation, amplitude modulation (e.g., Mary quadrature amplitude modulation, with M a positive integer); phase-shift keying; and so forth).

Access equipment or software related to access of a network also includes a processor 316 (or processor component) configured to confer, at least in part, functionality to substantially any electronic component in access equipment / software. In particular, processor 316 can facilitate configuration of access equipment and/or software through, for example, monitor component 304, antenna component 306, and one or more components therein. Additionally, access equipment and/or software can include display interface 318, which can display functions that control functionality of access equipment and/or software or reveal operation conditions thereof. In addition, display interface 318 can include a screen to convey information to an end user. In an aspect, display interface 318 can be a liquid crystal display, a plasma panel, a monolithic thin-film based electrochromic display, and so on. Moreover, display interface 318 can include a component (e.g., speaker) that facilitates communication of aural indicia, which can also be employed in connection with messages that convey operational instructions to an end user. Display interface 318 can also facilitate data entry (e.g., through a linked keypad or through touch gestures), which can cause access equipment and/or software to receive external commands (e.g., restart operation).

Broadband network interface 320 facilitates connection of access equipment or software to a service provider network (not shown) that can include one or more cellular technologies (e.g., third generation partnership project universal mobile telecommunication system, global system for mobile communication, and so on) through backhaul link(s) (not shown), which enable incoming and outgoing data flow. Broadband network interface 320 can be internal or external to access equipment and/or software and can utilize display interface 318 for end-user interaction and status information delivery.

Processor 316 can be functionally connected to communication platform 308 and can facilitate operations on data (e.g., symbols, bits, or chips) for multiplexing / demultiplexing, such as enabling direct and inverse fast Fourier transforms, selection of modulation rates, selection of data packet formats, inter-packet times, and so on. Moreover, processor 316 can be functionally connected, through data, system, or an address bus 322, to display interface 318 and broadband network interface 320, to confer, at least in part, functionality to each of such components.

In access equipment and/or software memory 324 can retain location and/or coverage area (e.g., macro sector, identifier(s)) access list(s) that authorize access to wireless coverage through access equipment and/or software sector intelligence that can include ranking of coverage areas in the wireless environment of access equipment and/or software, radio link quality and strength associated therewith, or the like. Memory 324 also can store data structures, code instructions and program modules, system or device information, code sequences for scrambling, spreading and pilot transmission, access point configuration, and so on. Processor 316 can be coupled (e.g., through a memory bus), to memory 324 in order to store and retrieve information used to operate and/or confer functionality to the components, platform, and interface that reside within access equipment and/or software.

The network device 300, system, component or device herein can be incorporated into or otherwise part of, an eNB, a UE, or some other type of electronic device in accordance with various embodiments. Specifically, the electronic device or components or interfaces described herein can be logic and/or circuitry that can be at least partially implemented in one or more of hardware, software, or firmware. In some embodiments, the electronic device logic can include radio transmit logic and receive logic (e.g., 310) coupled to control logic (e.g., processor 316). Additionally or alternatively, transmit / receive logic can comprise elements or modules of transceiver logic 310. The electronic device, component(s), circuitry or interfaces of such electronic device can be configured to perform operations similar to those described elsewhere in this disclosure.

In one embodiment, the processor 316, the communication platform / component 308, or the scheduling component 330 can generate or process PBCH transmissions on an unlicensed carrier with generation / transmission at the eNB (e.g., 102 (300)) and processing / reception at the UE (e.g., 102 (300)) with various predetermined criteria or defined parameters, which were not the same for the LAA system. The PBCH data can be transmitted within the DTxW window. In the legacy LTE network systems, the PBCH on the licensed carrier is periodically transmitted (e.g., every 10 ms), and similarly the PBCH can be transmitted on an unlicensed carrier to the UE 110 from the eNB 102 with a periodicity such as about 10 ms per frame with each DTxW period being about four frames per transmission or data burst.

Each frame of a DL transmission or data burst can carry similar or same information with a different scrambled version being transmitted every 10 ms, and the contents of the information can be refreshed every 40 ms so that updated or replenished data can be further communicated, such as a via subframe #0, subframe #1, subframe # 2, subframe #3, subframe #4 and so on at 0 ms, 10 ms, 30 ms, and 40 ms, respectively. As such, the eNB 102 (e.g., via the scheduling component 330, communication platform / component 308, processor 316, or other component) can basically transmit the same or similar information with a different scrambling code. For example, at subframe index # 4 at 40 ms the DL transmission or DL data burst can have new / updated information (e.g., DRS, MIB, eSIB, PSS/ SSS, predetermined criteria, or the like) being scheduled, transmitted or communicated on an unlicensed carrier / band to the UE 110, and continue to update, replenish or change based on the DTxW periodicity or period.

Further, the reason that particular predetermined criteria (e.g., position or location data) can be defined / generated as well as criteria or parameters related to this DTxW (e.g., for MuLTEfire) is because in an unlicensed carrier there is no guarantee that a PBCH transmission will be transmitted in a certain designated instance, or position at a particular frame boundary or subframe index number (e.g., subframe #0). Because the eNB 102, for example, performs an LBT process or CCA (e.g., via the LBT component 332) on the unlicensed channel before transmission of the PBCH, and can only transmit the PBCH once the channel is clear / idle / not reserved, the extent to which the DRS can or cannot be transmitted within the DTxW can vary. As such, the eNB 102 basically defines this DTxW window, and then depending on the LBT outcome, the PBCH transmission can be drifted or pushed back within the window until the LBT operation(s) performed by the LBT component 332 is successful or below a measurable threshold for a busy state to be determined. Thus, the PBCH transmission is generated to be at some point within the DTxW with a DRS subframe providing the MIB / eSIB to the UE 110.

Alternatively or additionally, where one or more LBT processes do not determine an idle state in time for a transmission of the DRS subframe with data (e.g., MIB and eSIB), the DRS transmission opportunity for transmission could become lost or not transmitted as a result of being outside of the DTxW window (e.g., an opportunity up to 10 ms, one frame, or ten subframes of a transmission). As such, the parameters of the DTxW windows (e.g., a duration or periodicity) can be explicitly or implicitly indicated, as well as depending upon the operations of the LBT component 332 and successful LBT processes or not.

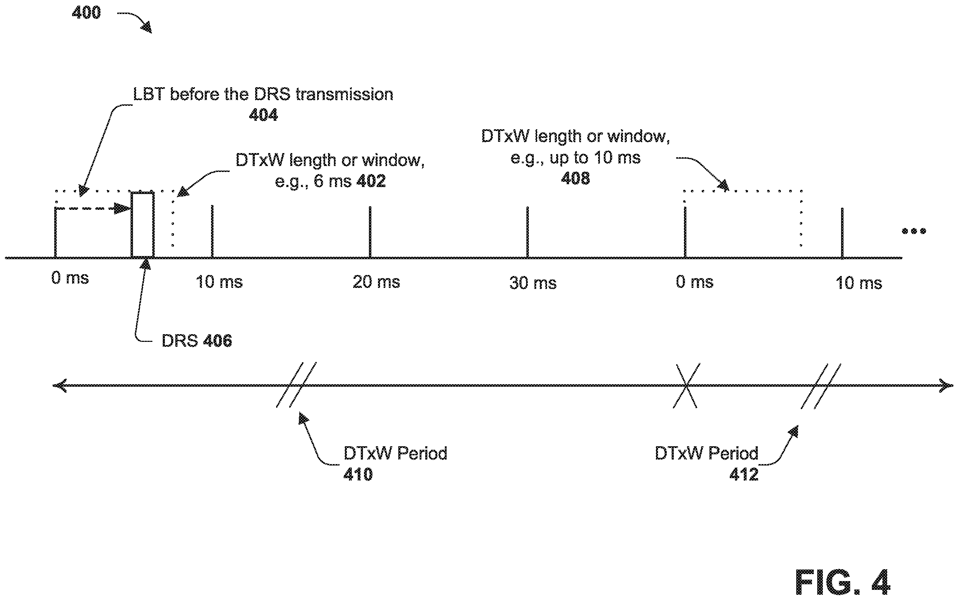

Referring briefly to **FIG. 4****,** illustrated is an example DTxW configuration for DL transmissions 400. The DTxW periodicity can be 40 ms for a DTxW period, and the DTxW window 402 can be 6 ms, for example, as predetermined criteria or parameters that can be used for generating or processing DL transmissions or data bursts. The DTxW 402 can be a window of opportunity, a duration or length of time, for transmission, for example, where one or more subframes can be generated or transmitted from an eNB 102 to one or more UEs 110, 116. A subframe transmission can occupy about 1 ms, for example, as a designated subframe duration / length and a frame can comprise a plurality of subframes (e.g., ten subframes at 1 ms each) when a subframe is a length of 10 ms. Further, a DL transmission or data burst can be replenished / renewed / updated to another DL transmission or updated in sequence after every four frames where a DTxW periodicity is 40 ms or otherwise operates according to a function providing the periodicity of 40 ms (e.g., mod(SFN, 4) = n, where n= zero). These parameters / criteria related to the DRS subframe and DTxW window signaling are examples, and other periodicities or durations, or configurations can also be envisioned as one of ordinary skill in the art could appreciate. For example, although n can be zero to identify the location of the DTxW window 402 and periodicity, n can also be 1, 2 or 3, for example.

The eNB 102 can generate a subframe-by-subframe (or sequential subframe) transmission that starts at the subframe boundary or frame boundary such as at zero ms, and each subframe can be a length of about 1 ms or another length as an example. The eNB 102 can further configure / add a 6 ms DTxW window 402 to the DL transmissions 400. This implies that there can then be six potential positions by which the DRS subframe 406 (including the MIB, eSIB or both) can be transmitted in this DTxW window 402. Additionally, if the eNB 102 succeeded in the LBT 404 via the LBT component 332, for example, which can be determined before the subframe #0 or the DRS subframe 406 is transmitted, then this subframe can be transmitted right in the front end of the DTxW window (e.g., at zero ms) after an idle state is determined.

As such, once the DRS subframe 406 is transmitted it will not necessarily transmit DRS subframes or data for the remaining 5 ms within the first frame, nor in the DTxW window 402, for example. In other instances, there can also be difficulty in grabbing the channel, reserving the channel, or not obtaining a successful LBT / clear channel assessment so that the LBT 404 took longer or more milliseconds to obtain an idle state, for example, than the transmission point instance of the DRS subframe 406 and as such the DRS subframe 402 can be drifted or pushed back within the DTxW window 404 also.

In a different DTxW 412 of a DL transmission sequence, the DTxW length or window does not comprise a DRS subframe 406 because the LBT via the LBT component 332, for example, was never successful. As such, the transmission opportunity for DRS within the DTxW was missed and no DRS subframe 406 was received by the UE or transmitted successfully by the eNB. From this example, there is no DRS as a result of LBT failure because the PBCH channel was continuously occupied such as by a neighboring WiFi station or other network device as indicated by the LBT operation protocol. Then the eNB (e.g., eNB 102) could not utilize an idle or clear channel, and thus is not able to transmit DRS transmission or DRS subframe 402 until the DTxW window had expired. The DTxW 402 is thus a part of the possible DRS or PBCH transmission opportunity but does not necessarily guarantee a transmission of DRS 406 within the DTxW window or not.

In another embodiment, the DTxW window or duration can be fixed or configurable. For example, the DTxW can be fixed at a particular duration with reference to a subframe boundary or position / DRS offset, such as at about 6 ms or otherwise. The eNB 102 however can also or alternatively vary the DTxW window either at generation or the UE 110 at reception of an indication to be up to the length of the frame such as up to about 10 ms or less.

Although the periodicity can be fixed to 40 ms, this can be a fixed minimum periodicity, for example. The DTxW periodicity can also be variable or configurable from among different higher multiples of time such as 80 ms, 160 ms, or the like, where 40 ms is a fixed minimum. In this manner, the periodicity can be fixed to at least 40 ms, fixed at 40 ms within one or more DL transmissions/ data bursts, or vary between different DL transmissions or periods (e.g., DTxW periods 410 and 412). As such, the eNB 102 can generate, or the UE 110 process, as fixed minimum DTxW periodicity to 40 ms, while utilizing a reuse legacy by redundancy version (RV) structures for PBCH (e.g., RV0 on SFN0, RV1 on SFN1, RV2 on SFN2, RV3 on SFN3). Higher multiples of DTxW periodicity than 40 ms can then further be allowed or selected by the eNB 102 for transmissions depending upon expediency in the network systems or deployments for efficient access to the unlicensed band so that the periodicity is a fixed or configurable criteria / parameter. In other words, the DTxW period can be fixed (e.g., 40 ms) or its period can be configurable to one or more different period durations (e.g., 40 ms, 80 ms, 120 ms, 160 ms, or the like). For example, the DRS transmission window period is fixed to 40 ms and its duration can be either fixed or configurable.

Additionally, this DTxW window / duration / length 402 can be semi-statically configurable up to 10 ms from among different frames, or DL transmission 410 and 412. At one period of transmission 410, the DTxW can be 6 ms, and at another period of transmission 412, the DTxW can be 10 ms, for example. The DTxW window (duration / length) can thus be configurable up to the duration of a frame, such as about 10 ms, for example.

In addition, each DTxW can include a subframe #0 starting from a frame boundary. The frame number or indices (e.g., frames # 0-4) can be utilized to indicate the periodicity for DTxW windows, and thus, for example, every mode four or mode four operation, the SFN, for example, can be the frame number of the system DL transmission. In one example, the mode operation of SFN and four is equal to zero, for example, by which then the DTxW window can start or restart. This can be demonstrated according to the following: SFNmod4=0, which means that when the SFN is equal to zero, zero mod or modulo four is equal to zero. Then, when SFN is 1 or 2 or 3, then this mod operation will say 1, 2, 3 and is not zero, and when SFN is equal to four, then four mod four is then equal to zero with a subframe #0. The result being that at every four frames another DTxW is provided as an opportunity for an updated DRS subframe to be transmitted to / received by a UE 110, for example. Therefore, the DTxW window can be transmitted on SFNmod4=0, which means that when the SFN is equal to zero, zero mod four is then equal to zero, as well all multiples of four associated with frames of the DL transmissions. Then, when SFN is 1 or 2 or 3, then this mod operation will say 1, 2, 3 and is not zero, and when SFN is equal to four, then four mod four is equal to zero in a sequential cycle. As such, each DTxW includes subframe #0 and starts from a frame boundary.

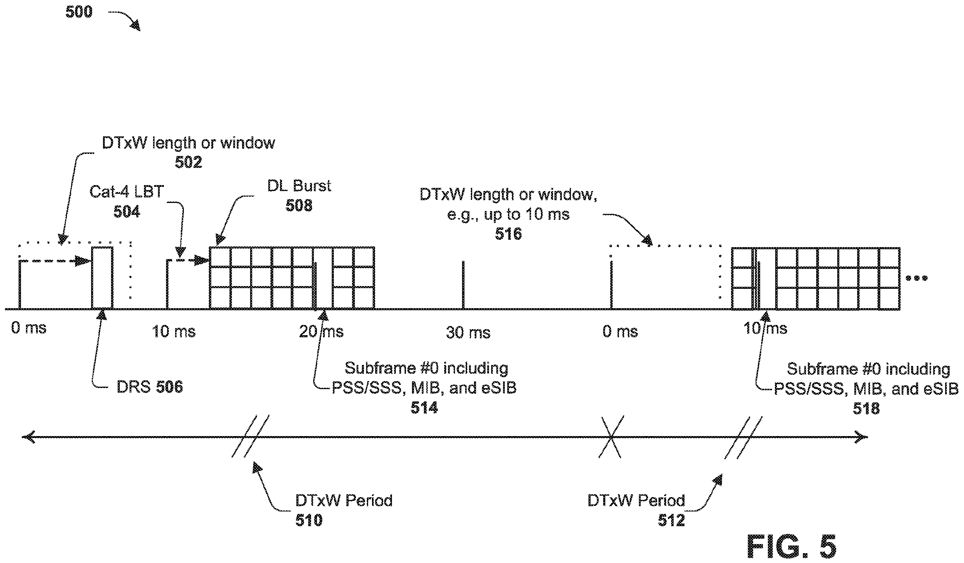

Referring now to **FIG. 5****,** illustrates is another example of a DL transmission configuration with transmission of DRS / MIB / eSIB. The DL transmission 500 can include a first DL transmission during a first DTxW period 510 and a second DTxW period 512. The first period 510 includes four frames at 10 ms in duration for each frame. Each frame can include up to ten subframes at about 1 ms each, for example. The first frame includes the DTxW window 502 include a DRS subframe 506 therein as the result of a successful LBT and an idle channel being detected by the eNB 102, for example.

**FIG. 5** further illustrates possible examples of MIB transmissions 514, 518 and possible DRS transmissions 506, where every subframe #0 can include an MBI within a data burst 508, for example. The MIB, eSIB, or PSS/SSS (including subframe of index # 0) transmission 514 or 518 can be transmitted outside of the DTxW window 502 or 516, respectively, when there is a DL transmission already ongoing or initiated as a result of an LBT 504 (e.g., a category 4 LBT or Cat-4 LBT 504) being successful or indicating an idle channel for PBCH.

The eNB 102, for example, can be the aggressor for the PBCH channel to generate an LBT for a transmission and utilizing the physical channel in DL. When the operations (e.g., LBT 504) overlaps with the subframe index # 0, and within this DL transmission, the subframe can include DRS/ MIB/eSIB information 514, 518 as illustrated. As such, the eNB 102 and UE (e.g., 110 or 116) can enable or allow opportunistic PBCH outside the DTxW window 502, or 516 only on SF0 of a frame (which is up to or decided by the eNB). This transmission of DRS/ MIB/eSIB information 514, 518 can be outside the DTxW 502, 516, whenever the eNB (e.g., 102) clears or achieves an evolved (e) (e.g., MuLTEfire) CCA that is successful and transmits PBCH on SF0, with ePSS / eSSS. Further, the MIB, eSIB, or both can be transmitted outside of subframe zero SF0, and each subframe indexed zero within a frame can include an MIB within a data burst.

In another embodiment, as discussed above also in reference to other figures (e.g., FIGs. 1-4), the identification of the location of DTxW 502 or 516 can be performed / indicated either explicitly or implicitly in the DL transmissions 500. The DRS transmission within the DTxW window 502, for example, can be floating subject to the LBT processes. When the UE 110, for example, detects the DRS subframe 506, the UE 110 does not necessarily know the subframe index. In the legacy system it was fine because it was presumed to begin transmission as subframe zero, and once the UE detects this PBCH or a transmission, the UE 110 can know the subframe boundary (e.g., subframe #0). Now, because the DRS 506 can be floating as with embodiments in this disclosure within the DTxW window 502, the UE 110 does not exactly know what the subframe index is, and thus, the eNB 102 can signal this gap or DRS offset from the starting of the subframe zero to indicate the offset to this DRS subframe 506 is, or if DRS is transmitted in this later part in other subframes. When, for example, the DTxW 502 has this window up to 10 ms, then this offset can be with respect to subframe # 5 or SF5. When the DRS 506 is transmitted among subframe zero to four, as a first subframe range, for example, then the offset can be indicated with respect to (or in reference to) subframe zero. When the DRS 506 is transmitted among subframe five to nine, as a second subframe range, for example, then the offset can be indicated with respect to subframe five.

In another embodiment, the eNB 102 can provide the offset indication explicitly using one or more additional bits. For example, three bits can be used to indicated an offset of zero, one, two, three, or four and to express five different values with three bits for indicating what the current offset value is. Once the UE detects the MIB information by decoding this offset value from the bits thereat, the UE can identify the current subframe index and position of the DRS 506, for example. Thus, three bits in a PBCH can be designated to signal a DRS offset inside a DTxW 502 or 516, for example. The three bits are to be with respect to subframe (SF) SF0 if DRS is sent in SF0-4 or SF5 if DRS is sent in SF 5-9, which can be inferred or further communicated (e.g., by the bits of unused values or otherwise based on the SSS sequence).

Thus, new information bits can be introduced to indicate whether the MIB is transmitted in DRS 506 within DTxW 502. On the other hand, in MuLTEfire, the MIB could also indicate the subframe index since the DRS 506 can be floating within DTxW 502 or 516. Note that the UEs can identify whether the DRS is transmitted either in subframe #0 to #4 or in subframe #5 to #9 based on the SSS sequence. Therefore, potentially 3 bits can be introduced for UEs (e.g., 110 or 116) to identify the subframe index among five different possibilities. Because three bits can express eight values of information, there can be three remaining expressions unused. Accordingly, in one embodiment, the system utilizes one of the unused expressions of the bits indicating subframe index to indicate whether the DRS 506 is transmitted within DTxW 502, for example. This explicit indication does not preclude the exploitation of any unused expressions in any information bits in MIB, as one of ordinary skill in the art could appreciate.

The UE 110 or 116, for example, can also identify the location of DTxW implicitly. For example, as stated above, a frame having mod(SFN, 4)=n, where n is 0, 1, 2, or 3, can be implicitly assumed among the eNB 102 and UEs 110, 116 such that the DTxW starts from the starting boundary of the frame. In embodiment, n = zero and the first subframe or subframe #0 of every four frames initiates a new / updated / replenished DTxW potentially with DRS.

In one embodiment, the SFN can be directly indicated by expanding the SFN information bits in MIB from 8 bits to 10 bits. The SFN can also be inferred from the scrambling sequence matching as in the legacy LTE system. For example, a scrambling sequence matching as in the legacy LTE system can be reused to provide further information. Each of the frames of a DL transmission such as subframes 0-3 can include redundancy versions or data that is the same but with different scrambling codes. As such, when the UE 110, for example, receives the PBCH from the eNB 102, it blindly detects from among the four different scrambling codes, and from among those, it identifies which scrambling code matches with the PBCH. Then from the scrambling code itself, there are four different scrambling codes or possibilities, meaning two information bits can be conveyed within this scrambling code itself. So by detecting one of the four scrambling codes, it can actually convey the frame index information among 0, 1, 2, or 3. So by simply detecting the scrambling code pattern, the UE 110, for example, can also identify whether this is frame zero, one, two or three. In particular, the SFN is by LTE specification can be defined as a 10 bit length information, and then in the MIB, the eNB 102, for example, could only transmit 8 most significant bits (MSBs) and the two least significant bits (LSB) are not transmitted, but instead can be inferred by the UE 110 by detecting the scrambling code pattern. Thus, the eNB 102 could potentially transmit the SFN as it is with 10 bits or alternatively reuse the legacy scrambling / matching mechanism as in LTE for an implicit inference of the SFN or related information for DRS or DTxW location information / criteria.

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

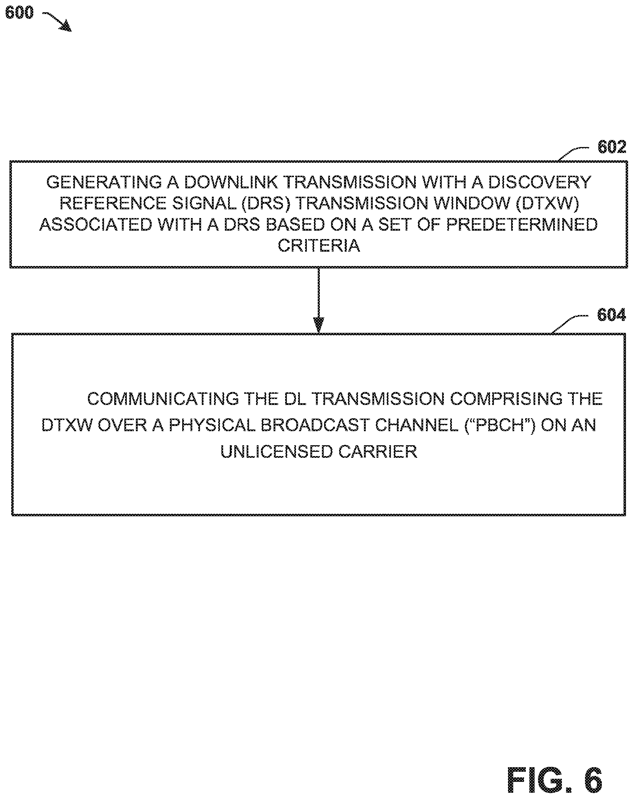

**FIG. 6** illustrates another example process flow or method 600 for signaling a DTxW and position information over a MuLTEfire network for a UE to UL or access the unlicensed network efficiently. At 602, an eNB (e.g., 102) can generate or a UE (e.g., 110) can process / receive a downlink transmission with a discovery reference signal (DRS) transmission window (DTxW) associated with a DRS based on a set of predetermined criteria. This criteria can include a periodicity, a duration / length of the DTxW, an offset, a range of subframes, a modulo or mode function (e.g., mod(SFN, 4) = n to determine position for DTxW, an system frame number for the function, or additional indication or bits to demonstrate location of a DRS within a DTxW or whether the DRS information such as an MIB or eSIB is outside of the DTxW, explicitly or implicitly for example.

At 604, the eNB 102 can communicate, or UE 102 receive, the DL transmission comprising the DTxW over a physical broadcast channel ("PBCH") on an unlicensed carrier.

At least one of a DTxW periodicity or a DTxW length can be determined, wherein the DTxW periodicity is configurable from a plurality of DTxW periodicities comprising 40 ms, 80ms, 120 ms, or 160 ms, for example, and the DTxW length can be configurable up to 10 ms, or be about 6 ms.

A position of the DRs can be signaled with a DRS offset within the DTxW of the DL transmission with respect to a subframe zero of the DL transmission when a DRS is within a first subframe range of the DL transmission and with respect to a subframe five when the DRS is within a second subframe range of the DL transmission.

Further, the DTxW can be generate by the eNB 102, or processed by the UE 110, with the set of predetermined criteria comprising one or more subframe indices and information bits that indicate whether a DRS is transmitted within the DTxW based on the one or more subframe indices.

The method can include configuring DRS transmission window and enabling the UE identification of DRS transmission window for the standalone system operating in the unlicensed band. The DRS transmission window period can be fixed to 40 ms and its duration (e.g., the period) can be either fixed or configurable. The duration of DRS transmission window can be fixed to 6 ms, for example, or configurable up to 10 ms or a frame duration also. Each DRS transmission window can include subframe #0 and start from a frame boundary. The UE can identify the location of DRS transmission window, which can be done explicitly or implicitly.

For example, information bit(s) can be introduced to indicate whether the MIB is transmitted in DRS within DRS transmission window or outside of it as part of an explicit indication. Some of the unused expressions of the already defined information bits in MIB can be also used for this purpose. As part of an implicit identification of the DTxW location a frame having mod(SFN, 4) = n can be implicitly assumed among the eNB 102 and UEs (e.g., UE 110 and 116), in which the DTxW starts from the starting boundary of the frame where n can be 0, 1, 2, or 3.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

As it employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

In the subject specification, terms such as "store," "data store," data storage," "database," and substantially any other information storage component relevant to operation and functionality of a component and/or process, refer to "memory components," or entities embodied in a "memory," or components including the memory. It is noted that the memory components described herein can be either volatile memory or nonvolatile memory, or can include both volatile and nonvolatile memory.

By way of illustration, and not limitation, nonvolatile memory, for example, can be included in a memory, non-volatile memory (see below), disk storage (see below), and memory storage (see below). Further, nonvolatile memory can be included in read only memory, programmable read only memory, electrically programmable read only memory, electrically erasable programmable read only memory, or flash memory. Volatile memory can include random access memory, which acts as external cache memory. By way of illustration and not limitation, random access memory is available in many forms such as synchronous random access memory, dynamic random access memory, synchronous dynamic random access memory, double data rate synchronous dynamic random access memory, enhanced synchronous dynamic random access memory, Synchlink dynamic random access memory, and direct Rambus random access memory. Additionally, the disclosed memory components of systems or methods herein are intended to include, without being limited to including, these and any other suitable types of memory.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules (e.g., procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA1800, *etc.* UTRA includes Wideband-CDMA (W-CDMA) and other variants of CDMA. Further, CDMA1800 covers IS-1800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.18, Flash-OFDML, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA1800 and UMB are described in documents from an organization named "3rd Generation Partnership Project 2" (3GPP2). Further, such wireless communication systems can additionally include peer-to-peer (e.g., mobile-to-mobile) *ad hoc* network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peak-to-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc*.), optical disks (*e.g.,* compact disk (CD), digital versatile disk (DVD), *etc*.), smart cards, and flash memory devices (*e.g.,* EPROM, card, stick, key drive, *etc*.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components (assemblies, devices, circuits, systems, *etc*.), the terms (including a reference to a "means") used to describe such components are intended to correspond, unless otherwise indicated, to any component or structure which performs the specified function of the described component (*e.g.,* that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus (300) configured to be employed in a user equipment, UE (110, 112, 114, 116, 118, 122), comprising:
one or more processors (316) configured to execute executable instructions stored in a memory (324) for one or more executable components comprising:
a communication component (308) configured to receive a downlink, DL, transmission (400, 500) on an unlicensed band based on a discovery reference signal, DRS (406, 506); and
a scheduling component (330) configured to process the DL transmission (400, 500) comprising a DRS transmission window, DTxW (402, 502), associated with the DRS (406, 506), based on a set of predetermined criteria, and identify a location of the DTxW (402, 502) within the DL transmission (400, 500) based on the set of predetermined criteria that comprises one or more information bits of the DRS (406, 506) ,wherein the one or more information bits comprise an indication of whether a master information block, MIB, is located in the DRS (406, 506) of the DTxW (402, 502) or outside of the DTxW (402, 502); and
a communication interface, coupled to the one or more processors (316), configured to receive or transmit communication transmissions.

2. The apparatus (300) of claim 1, wherein the scheduling component (330) is further configured to process the DTxW (402, 502) with a master information block, MIB, and an evolved system information block, eSIB, within the DTxW (402, 502) of the DL transmission (400, 500), wherein the eSIB comprises a combination of system information blocks.

3. The apparatus (300) of any one of claims 1-2, wherein the scheduling component (330) is further configured to identify a location of the DTxW (402, 502) within the DL transmission (400, 500) based on an inference from a starting boundary of a frame among a plurality of frames within the DL transmission (400, 500) or from a scrambling sequence.

4. The apparatus (300) of any one of claims 1-3, wherein the set of predetermined criteria comprise a DTxW length comprising a variable length among DL transmissions (400, 500).

5. The apparatus of any one of claims 1-4, wherein the set of predetermined criteria comprises a DTxW length and a DTxW periodicity.

6. The apparatus (300) of any one of claims 1-5, wherein the scheduling component (330) is further configured to process the DL transmission (400, 500) over a physical broadcast channel, PBCH, wherein the set of predetermined criteria comprises a plurality of bits that signal a DRS offset within the DL transmission (400, 500) with respect to a first designated subframe of the DL transmission (400, 500) when the DRS (406, 506) is within a first subframe range, and with respect to a second designated subframe of the DL transmission (400, 500) when the DRS (406, 506) is within a second subframe range.

7. The apparatus (300) of any one of claims 1-6, wherein the DTxW (402, 502) comprises a subframe zero and starts at one or more frame boundaries of one or more frames within the DL transmission (400, 500), wherein the one or more frames comprise a plurality of subframes.

8. The apparatus (300) of any one of claims 1-7, wherein the scheduling component (330) is further configured to infer a location of the DTxW (402, 502) in the DL transmission (400, 500) based on a function of one or more subframe indices of subframes within frames of the DL transmission (400, 500).

9. A method performed by an apparatus (300) configured to be employed in a user equipment, UE (110, 112, 114, 116, 118, 122), the method comprising:
receiving a downlink, DL, transmission (400, 500) on an unlicensed band based on a discovery reference signal, DRS (406, 506);
processing the DL transmission (400, 500) comprising a DRS transmission window, DTxW (402, 502), associated with the DRS (406, 506), based on a set of predetermined criteria;
identifying a location of the DTxW (402, 502) within the DL transmission (400, 500) based on the set of predetermined criteria that comprises one or more information bits of the DRS (406, 506)) ,wherein the one or more information bits comprise an indication of whether a master information block, MIB, is located in the DRS (406, 506) of the DTxW (402, 502) or outside of the DTxW (402, 502); and
receiving or transmitting communication transmissions.

10. The method of claim 9, the method further comprising:
processing the DTxW (402, 502) with a master information block, MIB, and an evolved system information block, eSIB, within the DTxW (402, 502) of the DL transmission (400, 500), wherein the eSIB comprises a combination of system information blocks.

11. The method of claim 9 or 10, the method further comprising:
identifying a location of the DTxW (402, 502) within the DL transmission (400, 500) based on an inference from a starting boundary of a frame among a plurality of frames within the DL transmission (400, 500) or from a scrambling sequence.

12. The method of any one of claims 9 to 11, wherein the set of predetermined criteria comprise a DTxW length comprising a variable length among DL transmissions (400, 500).

13. The method of any one of claims 9 to 12, wherein the set of predetermined criteria comprises a DTxW length and a DTxW periodicity.

14. A computer-readable medium storing executable instructions that, in response to execution by a user equipment, UE (110, 112, 114, 116, 118, 122), cause one or more processors (316) of the UE to perform the method of claim 9.

## Patentansprüche

1. Vorrichtung (300), die konfiguriert ist, um in einem Benutzergerät, UE (110, 112, 114, 116, 118, 122), verwendet zu werden, umfassend:
einen oder mehrere Prozessoren (316), die konfiguriert sind, um ausführbare Anweisungen auszuführen, die in einem Speicher (324) für eine oder mehrere ausführbare Komponenten gespeichert sind, umfassend:
eine Kommunikationskomponente (308), die konfiguriert ist, um eine Downlink-, DL-, Übertragung (400, 500) eines unlizenzierten Bands basierend auf einem Entdeckungsreferenzsignal, DRS (406, 506), zu empfangen; und
eine Planungskomponente (330), die konfiguriert ist, um die DL-Übertragung (400, 500), die ein DRS-Übertragungsfenster, DTxW (402, 502), umfasst, das mit dem DRS (406, 506) assoziiert ist, basierend auf einem Satz von vorbestimmten Kriterien zu verarbeiten und einen Position des DTxW (402, 502) innerhalb der DL-Übertragung (400, 500) basierend auf dem Satz von vorbestimmten Kriterien zu identifizieren, der ein oder mehrere Informationsbits des DRS (406, 506) umfasst, wobei das eine oder die mehreren Informationsbits eine Anzeige umfassen, ob sich ein Master-Informationsblock, MIB, im DRS (406, 506) des DTxW (402, 502) oder außerhalb des DTxW (402, 502) befindet; und
eine Kommunikationsschnittstelle, die mit dem einen oder den mehreren Prozessoren (316) gekoppelt ist, die konfiguriert ist, um Kommunikationsübertragungen zu empfangen oder zu übertragen.

2. Vorrichtung (300) nach Anspruch 1, wobei die Planungskomponente (330) ferner konfiguriert ist, um das DTxW (402, 502) mit einem Master-Informationsblock, MIB, und einem entwickelten Systeminformationsblock, eSIB, innerhalb des DTxW (402, 502) der DL-Übertragung (400, 500) zu verarbeiten, wobei der eSIB eine Kombination von Systeminformationsblöcken umfasst.

3. Vorrichtung (300) nach einem der Ansprüche 1 bis 2, wobei die Planungskomponente (330) ferner konfiguriert ist, um eine Position des DTxW (402, 502) innerhalb der DL-Übertragung (400, 500) basierend auf einer Inferenz von einer Startgrenze eines Rahmens von einer Vielzahl von Rahmen innerhalb der DL-Übertragung (400, 500) oder von einer Verwürfelungssequenz zu identifizieren.

4. Vorrichtung (300) nach einem der Ansprüche 1 bis 3, wobei der Satz von vorbestimmten Kriterien eine DTxW-Länge umfasst, die eine variable Länge unter DL-Übertragungen (400, 500) umfasst.

5. Vorrichtung nach einem der Ansprüche 1 bis 4, wobei der Satz von vorbestimmten Kriterien eine DTxW-Länge und eine DTxW-Periodizität umfasst.

6. Vorrichtung (300) nach einem der Ansprüche 1 bis 5, wobei die Planungskomponente (330) ferner konfiguriert ist, um die DL-Übertragung (400, 500) über einen physikalischen Broadcastkanal, PBCH, zu verarbeiten, wobei der Satz von vorbestimmten Kriterien eine Vielzahl von Bits umfasst, die einen DRS-Versatz innerhalb der DL-Übertragung (400, 500) in Bezug auf einen ersten designierten Unterrahmen der DL-Übertragung (400, 500) signalisieren, wenn das DRS (406, 506) innerhalb eines ersten Unterrahmenbereichs liegt, und in Bezug auf einen zweiten designierten Unterrahmen der DL-Übertragung (400, 500), wenn das DRS (406, 506) innerhalb eines zweiten Unterrahmenbereichs liegt.

7. Vorrichtung (300) nach einem der Ansprüche 1 bis 6, wobei das DTxW (402, 502) eine Unterrahmen Null umfasst und an einer oder mehreren Rahmengrenzen von einem oder mehreren Rahmen innerhalb der DL-Übertragung (400, 500) beginnt, wobei der eine oder die mehreren Rahmen eine Vielzahl von Unterrahmen umfassen.

8. Vorrichtung (300) nach einem der Ansprüche 1 bis 7, wobei die Planungskomponente (330) ferner konfiguriert ist, um eine Position des DTxW (402, 502) in der DL-Übertragung (400, 500) basierend auf einer Funktion von einem oder mehreren Unterrahmenindizes von Unterrahmen innerhalb von Rahmen der DL-Übertragung (400, 500) abzuleiten.

9. Verfahren, das durch eine Vorrichtung (300) durchgeführt wird, die konfiguriert ist, um in einem Benutzergerät, UE (110, 112, 114, 116, 118, 122), verwendet zu werden, wobei das Verfahren umfasst:
Empfangen einer Downlink-, DL-, Übertragung (400, 500) auf einem unlizenzierten Band basierend auf einem Entdeckungsreferenzsignal, DRS (406, 506);
Verarbeiten der DL-Übertragung (400, 500), die ein DRS-Übertragungsfenster, DTxW (402, 502), umfasst, das mit dem DRS (406, 506) assoziiert ist, basierend auf einem Satz von vorbestimmten Kriterien;
Identifizieren einer Position des DTxW (402, 502) innerhalb der DL-Übertragung (400, 500) basierend auf dem Satz von vorbestimmten Kriterien, der ein oder mehrere Informationsbits des DRS (406, 506) umfasst, wobei das eine oder die mehreren Informationsbits eine Anzeige umfassen, ob sich ein Master-Informationsblock, MIB, im DRS (406, 506) des DTxW (402, 502) oder außerhalb des DTxW (402, 502) befindet; und
Empfangen oder Übertragen von Kommunikationsübertragungen.

10. Verfahren nach Anspruch 9, wobei das Verfahren ferner umfasst:
Verarbeiten des DTxW (402, 502) mit einem Master-Informationsblock, MIB, und einem entwickelten Systeminformationsblock, eSIB, innerhalb des DTxW (402, 502) der DL-Übertragung (400, 500), wobei der eSIB eine Kombination von Systeminformationsblöcken umfasst.

11. Verfahren nach Anspruch 9 oder 10, das Verfahren ferner umfassend:
Identifizieren einer Position des DTxW (402, 502) innerhalb der DL-Übertragung (400, 500) basierend auf einer Ableitung von einer Startgrenze eines Rahmens von einer Vielzahl von Rahmen innerhalb der DL-Übertragung (400, 500) oder von einer Verwürfelungssequenz.

12. Verfahren nach einem der Ansprüche 9 bis 11, wobei der Satz von vorbestimmten Kriterien eine DTxW-Länge umfasst, die eine variable Länge unter DL-Übertragungen (400, 500) umfasst.

13. Verfahren nach einem der Ansprüche 9 bis 12, wobei der Satz von vorbestimmten Kriterien eine DTxW-Länge und eine DTxW-Periodizität umfasst.

14. Computerlesbarer Medium, das ausführbare Anweisungen speichert, die als Reaktion auf die Ausführung durch ein Benutzergerät, UE (110, 112, 114, 116, 118, 122), einen oder mehrere Prozessoren (316) des UE veranlassen, das Verfahren nach Anspruch 9 durchzuführen.

## Revendications

1. Un appareil (300) configuré pour être employé dans un équipement d'utilisateur, UE (110, 112, 114, 116, 118, 122), comprenant :
un ou plusieurs processeurs (316) configurés pour exécuter des instructions exécutables stockées dans une mémoire (324) pour une ou plusieurs composantes exécutables comprenant :
une composante de communication (308) configurée pour recevoir une transmission en liaison descendante, DL, (400, 500) sur une bande sans licence sur la base d'un signal de référence de découverte, DRS (406, 506) ; et
une composante de planification (330) configurée pour traiter la transmission DL (400, 500) comprenant une fenêtre de transmission de DRS, DTxW (402, 502), associée au DRS (406, 506), sur la base d'un ensemble de critères prédéterminés, et identifier un emplacement de la DTxW (402, 502) à l'intérieur de la transmission DL (400, 500) sur la base de l'ensemble de critères prédéterminés qui comprennent un ou plusieurs bits d'information du DRS (406, 506), dans lequel les un ou plusieurs bits d'information comprennent une indication précisant si un bloc d'information maître, MIB, est situé dans le DRS (406, 506) de la DTxW (402, 502) ou en dehors de la DTxW (402, 502) ; et
une interface de communication, couplée aux un ou plusieurs processeurs (316), configurée pour recevoir ou transmettre des transmissions de communication.

2. L'appareil (300) selon la revendication 1, dans lequel la composante de planification (330) est en outre configurée pour traiter la DTxW (402, 502) avec un bloc d'information maître, MIB, et avec un bloc d'information système évolué, eSIB, à l'intérieur de la DTxW (402, 502) de la transmission DL (400, 500), dans lequel l'eSIB comprend une combinaison de blocs d'information système.

3. L'appareil (300) selon l'une quelconque des revendications 1 à 2, dans lequel la composante de planification (330) est en outre configurée pour identifier un emplacement de la DTxW (402, 502) à l'intérieur de la transmission DL (400, 500) sur la base d'une inférence à partir d'une limite de début d'une trame parmi une pluralité de trames à l'intérieur de la transmission DL (400, 500) ou à partir d'une séquence d'embrouillage.

4. L'appareil (300) selon l'une quelconque des revendications 1 à 3, dans lequel l'ensemble de critères prédéterminés comprennent une longueur de DTxW comprenant une longueur variable parmi des transmissions DL (400, 500) .

5. L'appareil selon l'une quelconque des revendications 1 à 4, dans lequel l'ensemble de critères prédéterminés comprennent une longueur de DTxW et une périodicité de DTxW.

6. L'appareil (300) selon l'une quelconque des revendications 1 à 5, dans lequel la composante de planification (330) est en outre configurée pour traiter la transmission DL (400, 500) via un canal physique de diffusion, PBCH, dans lequel l'ensemble de critères prédéterminés comprennent une pluralité de bits qui signalisent un décalage de DRS à l'intérieur de la transmission DL (400, 500) par rapport à une première sous-trame désignée de la transmission DL (400, 500) lorsque le DRS (406, 506) est à l'intérieur d'une première plage de sous-trames, et par rapport à une seconde sous-trame désignée de la transmission DL (400, 500) lorsque le DRS (406, 506) est à l'intérieur d'une seconde plage de sous-trames.

7. L'appareil (300) selon l'une quelconque des revendications 1 à 6, dans lequel la DTxW (402, 502) comprend une sous-trame zéro et débute à une ou plusieurs limites de trame d'une ou de plusieurs trames à l'intérieur de la transmission DL (400, 500), dans lequel les une ou plusieurs trames comprennent une pluralité de sous-trames.

8. L'appareil (300) selon l'une quelconque des revendications 1 à 7, dans lequel la composante de planification (330) est en outre configurée pour inférer un emplacement de la DTxW (402, 502) dans la transmission DL (400, 500) sur la base d'une fonction d'un ou de plusieurs indices de sous-trame des sous-trames à l'intérieur de trames de la transmission DL (400, 500).

9. Un procédé réalisé par un appareil (300) configuré pour être employé dans un équipement d'utilisateur, UE (110, 112, 114, 116, 118, 122), le procédé comprenant :
la réception d'une transmission en liaison descendante, DL, (400, 500) sur une bande sans licence sur la base d'un signal de référence de découverte, DRS (406, 506) ;
le traitement de la transmission DL (400, 500) comprenant une fenêtre de transmission de DRS, DTxW (402, 502), associée au DRS (406, 506), sur la base d'un ensemble de critères prédéterminés ;
l'identification d'un emplacement de la DTxW (402, 502) à l'intérieur de la transmission DL (400, 500) sur la base de l'ensemble de critères prédéterminés qui comprennent un ou plusieurs bits d'information du DRS (406, 506), dans lequel les un ou plusieurs bits d'information comprennent une indication précisant si un bloc d'information maître, MIB, est situé dans le DRS (406, 506) de la DTxW (402, 502) ou en dehors de la DTxW (402, 502) ; et
la réception ou la transmission de transmissions de communication.

10. Le procédé selon la revendication 9, le procédé comprenant en outre :
le traitement de la DTxW (402, 502) avec un bloc d'information maître, MIB, et avec un bloc d'information système évolué, eSIB, à l'intérieur de la DTxW (402, 502) de la transmission DL (400, 500), dans lequel l'eSIB comprend une combinaison de blocs d'information système.

11. Le procédé selon la revendication 9 ou 10, le procédé comprenant en outre :
l'identification d'un emplacement de la DTxW (402, 502) à l'intérieur de la transmission DL (400, 500) sur la base d'une inférence à partir d'une limite de début d'une trame parmi une pluralité de trames à l'intérieur de la transmission DL (400, 500) ou à partir d'une séquence d'embrouillage.

12. Le procédé selon l'une quelconque des revendications 9 à 11, dans lequel l'ensemble de critères prédéterminés comprennent une longueur de DTxW comprenant une longueur variable parmi des transmissions DL (400, 500).

13. Le procédé selon l'une quelconque des revendications 9 à 12, dans lequel l'ensemble de critères prédéterminés comprennent une longueur de DTxW et une périodicité de DTxW.

14. Un support lisible par ordinateur stockant des instructions exécutables qui, en réponse à leur exécution par un équipement d'utilisateur, UE (110, 112, 114, 116, 118, 122), amènent un ou plusieurs processeurs (316) de l'UE à réaliser le procédé selon la revendication 9.
